# EUROPEAN PATENT SPECIFICATION

(11) **EP 2 397 819 B1**
(45) Date of publication and mention of the grant of the patent: **15.05.2013**
(21) Application number: 10166638.6
(22) Date of filing: 21.06.2010
(51) Int. Cl.: G01C 21/36

(54) **Method, device and system for presenting navigational information**
Verfahren, Vorrichtung und System zur Darstellung von Navigationsinformation
Procédé, dispositif et système de présentation d'informations de navigation

(43) Date of publication of application: 21.12.2011
(73) Proprietor: Research In Motion Limited, Waterloo, ON N2L 3W8 (CA)
(72) Inventor: Lindner, Jeffery, Erhard, Waterloo Ontario N2L 5Z5 (CA)
(74) Representative: MERH-IP Matias Erny Reichl Hoffmann

(56) References cited:
- WO-A1-2010/012310
- US-A1- 2007 088 497

## Description

### TECHNICAL FIELD

The present disclosure relates generally to mobile electronic devices and, in particular, to techniques for presenting navigational information on a mobile device.

### BACKGROUND

Mobile devices such as hand-held GPS units and in-vehicle GPS units have been developed for providing navigation guidance. Wireless communication-enabled mobile devices such as GPS-enabled cellular telephones, smart phones, handheld PDAs and the like have also been equipped with navigation functionality for providing navigation guidance. These devices are configured to determine the location of the mobile device, to allow a user to specify a destination and to provide navigational information for traversing a route from the current location to the specified destination.

Navigational information, such as turn-by-turn route guidance instructions, are typically presented to the user either visually on a display, audibly via a speaker, or both. Typically, the navigational information is presented as directional arrows on maps showing the user's current location, text displayed on the mobile device screen and as audio alerts such as "turn left now". The user is required to correlate the information provided with the observed environment, potentially resulting in delays and errors.

International Patent Application Publication No. WO 2010/012310 discloses a method of displaying navigation data in 3D. The technology relates to a computer arrangement comprising a processor and memory accessible for the processor. The memory comprises a computer program comprising data and instructions arranged to allow said processor to: obtain an image to be displayed, obtain depth information relating to the image, use depth information to identify at least one region in the image, and select display mode for at least one identified region.

U.S. Patent Application Publication No. 2007/0088497 discloses a matching camera-photographed image with map data in portable terminal and travel route guidance method. The technology relates to matching a camera-photographed image with map data in a portable terminal. Location information of objects of images photographed by a camera and location information of display objects, such as a building included in the map data are calculated based on location information of the camera, and the calculated location information is used to match the objects with the display objects. The image photographed by the camera is displayed on a screen, and text information of display objects matched to the objects is read out from the map data and is displayed on the locations of the objects displayed on the screen. If a user moves, a travel route is guided using the matching information between the objects and display objects, so the user can be guided with the travel route while personally checking objects such as a building.

### SUMMARY

An aspect of the present technology is a method of presenting navigational information on a mobile device, the mobile device configured to determine its location, the method comprising: obtaining one or more input images; generating one or more output images by obtaining navigational information for the mobile device and processing the one or more input images to integrate the obtained navigational information, wherein processing the one or more input images includes recognizing one or more objects in the one or more input images and said processing the one or more input images further comprises rendering one or more objects, and wherein the one or more rendered objects comprise rendered route objects indicative of two or more navigation routes, each navigation route being assigned a ranking based on one or more route parameters and wherein the rendered route objects are further indicative of said ranking; and providing the one or more output images for presentation.

Another aspect of the present technology is a mobile device configured to present navigational information, the mobile device configured to determine its location, the mobile device comprising: a display control module configured to obtain one or more input images, and provide one or more output images for presentation; wherein: the display control module is further configured to generate the one or more output images by obtaining navigational information for the mobile device and processing the one or more input images to integrate the obtained navigational information; wherein processing the one or more input images comprises recognizing one or more objects in the one or more input images and said processing the one or more input images further comprises rendering one or more objects, and wherein the one or more rendered objects comprise rendered route objects indicative of two or more navigation routes, each navigation route being assigned a ranking based on one or more route parameters and wherein the rendered route objects are further indicative of said ranking.

Yet another aspect of the present technology is a computer program product for presenting navigational information for a mobile device configured to determine its location, said computer program product comprising code which, when loaded into a memory and executed on an associated processor, is adapted to perform the following: obtaining one or more input images; generating one or more output images by obtaining navigational information for the mobile device and processing the one or more input images to integrate the obtained navigational information, wherein processing the one or more input images comprises recognizing one or more objects in the one or more input images and said processing the one or more input images further comprises rendering one or more objects, and wherein the one or more rendered objects comprise rendered route objects indicative of two or more navigation routes, each navigation route being assigned a ranking based on one or more route parameters and wherein the rendered route objects are further indicative of said ranking; and providing the one or more output images for presentation.

### BRIEF DESCRIPTION OF THE DRAWINGS

Further features and advantages of the present technology will become apparent from the following detailed description, taken in combination with the appended drawings, in which:

FIG. 1 is a flowchart of a method for presenting navigational information for a mobile device in accordance with embodiments of the present technology;

FIG. 2 is a flowchart of a method of processing an input image in accordance with embodiments of the present technology;

FIG. 3 is an exemplary illustration, in accordance with embodiments of the present technology, of modifying the input image;

FIG. 4 is an exemplary illustration, in accordance with embodiments of the present technology, of modifying the input image;

FIG. 5 illustrates an exemplary method of creating an output image by combining two layers in accordance with embodiments of the present technology;

FIG. 6 illustrates an exemplary method of creating an output image by combining three layers in accordance with embodiments of the present technology;

FIG. 7(a) illustrates a block diagram of an exemplary system configured for presenting navigational information in accordance with embodiments of the present technology;

FIG 7(b) illustrates a block diagram of an exemplary image generation module for generating an output image from an input image in accordance with embodiments of the present technology;

FIG. 8 illustrates a block diagram of an exemplary mobile device in accordance with embodiments of the present technology;

It will be noted that throughout the appended drawings, like features are identified by like reference numerals.

### DETAILED DESCRIPTION

The present technology addresses a problem identified by the applicant pertaining to presentation of navigational information to the user. In particular, the applicant has recognized that there has not been, to date, a satisfactory method, apparatus or computer program product for presenting navigational information effectively. Conventionally, navigational information is presented with directional arrows on a map and as textual or audio alerts. However, the user has to correlate the provided information with the observed environment which may potentially lead to errors and delays in following directions.

The present technology addresses the foregoing technical problems by providing a method, mobile device, and computer program product for presenting navigational information.

The details and particulars of these aspects of the technology will now be described below, by way of example, with reference to the attached drawings.

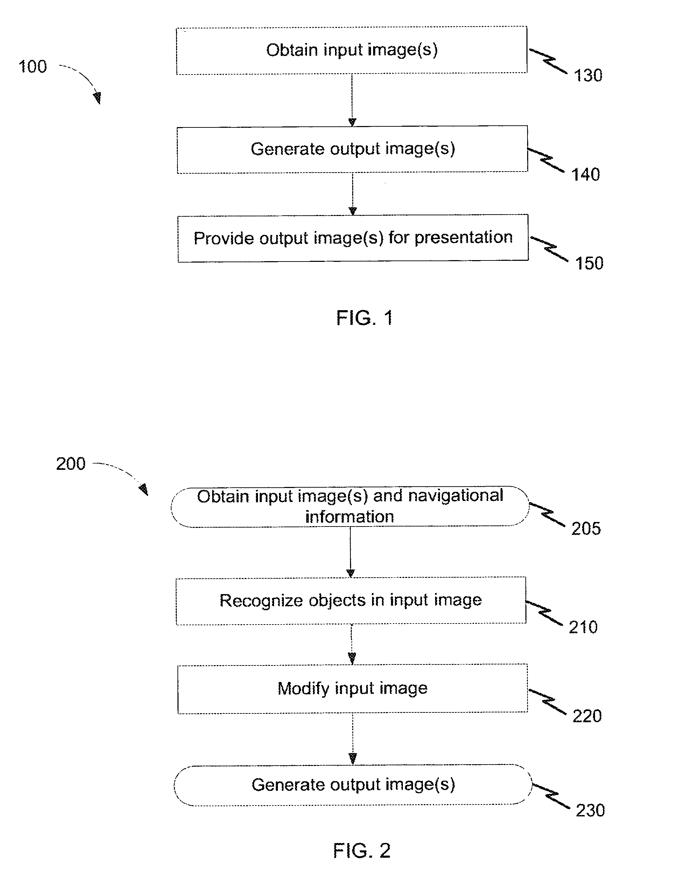

FIG.1 illustrates a method **100** for presenting navigational information for a mobile device in accordance with embodiments of the present technology. Referring to FIG. 1, the method **100** comprises obtaining one or more input images **130,** generating one or more output images **140** by processing of the input images to integrate navigational information therein, and presenting the one or more output images **150.**

Exemplarily, an input image of a user's current location may be obtained from the camera on the user's mobile phone. The obtained image may be processed to recognize the streets shown in the input image and an output image may be presented highlighting the street comprising the navigation route in the input image.

Embodiments of the present technology, as described herein, may be used in a variety of augmented reality applications such as automobile and pedestrian navigation, electronic tourist guides, gaming applications and activities such as geocaching and the like.

### Input Image

An image is captured by an image-capturing device such as a still camera, video camera, infra-red camera or the like. The captured image can be indicative of a current location of the mobile device. For example, the video camera of a mobile device may be used to continuously obtain an image at the user's current location. The captured image can be indicative of a destination for the mobile device. Exemplarily, a tourist wishing to find a route to a particular landmark may capture an image including the landmark, for example in the distance, using the mobile device camera. The user may then specify the landmark as a desired destination by indicating it on the captured image.

The image may be captured in a suitable image format as would be readily understood by a worker skilled in the art. Formats for capturing images may include raw image formats, Joint Photographic Experts Group File (JPEG) and the like for still and video images and interlaced and progressive scanning formats for digital video images.

The captured image, hereinafter referred to as the input image, is converted to a digitized representation if it is not in a digital format. The digitized representation comprises pixels with image parameters such as resolution, pixel density, pixel bit depth, image size and magnification based in part on the image-capturing device.

The input image may be stored in a proprietary or standard digital image format, as would be readily understood by a worker skilled in the art. Standard digital formats for still images include raster formats such as Joint Photographic Experts Group File Interchange Format(JPEG/JFIF), Tagged Image File Format (TIFF), raw image formats, Graphics Interchange Format (GIF), Tagged Image File Format (TIFF), Bitmap and the like, and vector formats, such as Computer Graphics Metafile (CGM), Scalable Vector Graphics (SVG), Encapsulated Postscript (EPS), Windows Metafile (WMF), Enhanced Metafile (EMF) and the like. Standard digital formats for moving images include H-261, Theora and Moving Picture Experts Group (MPEG) formats such as MPEG-1, MPEG-2, MPEG-4 and the like.

Processing of the input image can comprise converting the image from one format to another, for example to decompress the input image, and to convert it to a format amenable to selectable modification of pixels in the input image. If the image corresponds to a still image contained in a compressed video file, processing of the image can comprise reconstructing the still image from the compressed video file, as would be readily understood by a worker skilled in the art.

The input image may also be associated with image parameters such as the location, orientation, tilt and zoom that may be used for processing of the input image. The image parameters may be obtained from sensors operatively associated with the image-capturing device.

The input image, as referred to herein, may be a frame from a series of images captured periodically at a given frame rate or it may be a still image captured substantially immediately prior to processing and subsequent output of a processed image.

The input image may be subjected to various pre-processing operations such as resampling, noise reduction, image stabilization and the like. For example, the image may be resampled in order to change the size of the image to fit the dimensions of the display. Noise reduction and image stabilization may be necessary to improve the quality of the image before it can be subjected to more detailed processing. The pre-processing step may also include adjustments to image attributes such as color, balance, brightness, luminance, lighting, saturation and contrast.

### Processing of Input Image

An output image is formed by processing the input image to integrate navigational information therein. For example navigational information may be integrated into the input image as a visual representation appearing in the output image.

Navigational information as used herein may comprise information that may be relevant to a user at a current location or for a user traversing a route. For example, navigational information may comprise map information, a visual representation of route information, places of interest along the route or at the current location, weather and traffic information, route directions, travel speed, or the like, or a combination thereof.

FIG. 2 is a flowchart illustrating the steps involved in a method **200** for generating an output image by processing of the input image in accordance with embodiments of the present technology. The method **200** comprises obtaining an input image and navigational information **205,** recognizing one or more objects **210** in the input image, processing the input image **220,** at least in part based on the one or more objects recognized, to integrate navigational information with the input image, and generating the output image **230.**

Exemplarily, an object such as a street along which navigation route proceeds may be recognized **210** in the input image and the input image may be modified **220** to highlight the navigation route along the recognized street.

Accordingly, processing the input image to integrate navigational information may comprise recognizing one or more objects in the input image.

Processing the input image to integrate navigational information can further comprise modifying the input image at least in part based on the one or more objects recognized. Modifying the input image may comprise adding, modifying, removing or replacing one or more objects from the input image.

Processing of the input image can be performed by the mobile device. The processing can be performed at a remote server, exemplarily operated by a service and application provider. The processing can be performed by both. The distribution of processing may be based on factors such as the computational capabilities of the respective processing modules, communications capabilities between the mobile device and the remote server and the availability of databases for maps and images. One or more load balancing activities may be performed for the distribution of the processing burden, as would be readily understood by a worker skilled in the art.

### Recognizing objects in the input image

The input image is processed to recognize objects. Recognizing objects in the input image, as used herein, may comprise identifying pixels in the image that correspond to particular objects such as a particular street or building.

The objects recognized in the input image can include objects related to navigational information, for example, objects that are indicative of navigational instructions wherein such objects are called navigational objects. Navigational objects may include objects such as streets, intersections, buildings, landmarks, traffic lights and signs, turns, roundabouts, dead ends and the like. The objects recognized in the input image can also include other objects such as cars, trees, people and the like. Accordingly, the step of recognizing may comprise distinguishing or differentiating navigational objects from other objects.

Recognizing objects in the input image can comprise distinguishing or detecting objects such as streets, buildings, vehicles and the like. Recognizing objects can further comprise identifying particular instances of more general objects. For example, the image is first processed to detect the portions of the image that represent the "street". Then, the one or more objects classified as "street" may be identified as a specific street by name, for example, "First Ave"," Second Ave.", etc."

Thus, the image is processed to distinguish objects such as the street from the rest of the image which might contain other objects such as lawn, sidewalks, buildings, and the like. Detection of particular objects in an image may be performed using various object recognition and pattern detection techniques that will be readily known to a worker skilled in the art. Detection of particular instances of objects may be aided by information regarding location of the image, for example using GPS coordinates acquired when capturing the image.

Object and pattern recognition techniques and algorithms are well known in various fields related to computer vision such as facial detection, baggage scanning, etc. Typical object recognition techniques comprise segmenting the image into segments or sets of pixels that share some common visual characteristic using techniques such as contrast enhancement. The segmented regions or objects may be subjected to feature extraction. Typical features detected by feature extraction algorithms include edges, corners, blobs and ridges. Other properties such as colour, texture, shape and size of the objects may also be analyzed. Various rough and detailed classification steps may be successively applied to the objects to compare their feature sets with a set of standard patterns such as patterns for tree, car, street, etc. stored in a database and to determine the object classes.

The objects detected in the input image may be identified by comparing the input image to maps or other images stored in a database. In order to facilitate retrieval of relevant maps and images, the input image may be tagged with information related to location in which the image was captured in addition to parameters such as the tilt, orientation, scale and field of view of the image-capturing device used to capture the input image. Exemplarily, location information may be obtained from a GPS receiver, orientation information from a magnometer, tilt information from tilt sensors and information related to the scale of the input image and its field of view may be derived from the zoom parameter of the image capturing device.

Databases containing extensive automobile and pedestrian navigation maps are well-known and widely used in various navigation devices and applications. Such databases may be stored locally on a mobile device or on a remotely accessible server. Some applications also provide images of locations and routes in addition to map and terrain information. Exemplarily, the images may be stored in the database and the database entry may be linked to or tagged with reference to the location in the captured image. For example, a reference may indicate New York City, Times Square, north-west corner, latitude and longitude. Images in a database may also be stored with reference to image-capturing device parameters such as the location, orientation, tilt and magnification of the image-capturing device. For example, a reference may indicate: New York City, Times Square, south-west corner, latitude and longitude, facing N15W.

An input image can be processed to distinguish and identify objects in a predetermined portion of the input image, for example in the entire input image or a particular quadrant of the input image. For example, all the buildings, streets and landmarks appearing in the input image may be identified. Target objects can be specified and the input image may be processed to recognize the specified target objects which may or may not be navigational objects. For example, the image may be processed to recognize one or more navigational objects including streets representing the navigation route and one or more landmarks appearing along the navigation route.

Processing an input image to detect target objects therein can comprise as a first step, determining an approximate region where a particular target object, for example the navigation route, is expected to be detected. An approximate region of the input image may be identified for each target object by comparing the input image to maps and images in a database. This approximate region of the image may then be subjected to further detailed processing to distinguish the pixels in the input image representing the target objects. For example, the approximate region of the input image where the navigation route is expected to be detected may be further processed to distinguish pixels representing the navigation route from pixels representing other objects such as sidewalks, neighbouring buildings etc.

In order to detect a particular target object in successive input images (such as successive frames captured by a video camera), the series of input images can be compared using information related to the motion of the image-capturing device. Once a particular object of interest (for example, a building) has been recognized in a first input image, the position of this particular object (for example, the building), and thus the pixels corresponding to this object of interest, may be predicted in succeeding input images using information known about the motion of the image-capturing device. For example, if a particular building is identified in a first input image, and the mobile device is known to have moved 20m to the right when the second input image is captured, the location of the pixels representing the particular building in the second input image can be estimated based on the knowledge that the field of view has shifted to the right compared to the first input image by an amount corresponding to approximately 20m. Motion of the mobile device may comprise changes in position as well as orientation and tilt of the image capturing device. Accordingly, various sensors for detecting position and motion such as GPS receivers, magnometers, tilt sensors, gyros, and acclerometers may be provided to detect various aspects of motion. A worker skilled in the art will be familiar with appropriate sensors for detection of motion and position. Motion information may be obtained for either or both of the image-capturing device and the mobile device.

Processing an input image to recognize target objects can comprise recognition of a reference object. The reference object may be a particular landmark building, a particular corner of a building, a traffic light, a tree or other prominent object in an input image. For example, an input image may be quickly scanned to determine the location of this reference object. The location of other objects in relation to the location of the reference object may be known, either based on a previous input image or based on maps or images obtained from the database. Accordingly, once the reference object has been recognized in an input image, other objects in the input image may be detected based on the location of the reference object and its relationship to the other objects.

### Modifying the input image

Processing the input image can further comprise modifying the input image to integrate navigational information. Navigational information may be obtained based at least in part on a determination of the location of the mobile device, and optionally based on one or more objects recognized in the input image. The one or more objects may be navigational objects or other objects.

The input image can be modified at least in part based on one or more objects recognized in the input image. The one or more recognized objects may be navigational objects or other objects.

The input image may be modified to add, remove or modify objects in the input image. The objects can be indicative of navigational information. For example, graphical, textual or symbolic objects may be added to the image. As another example, objects in the input image such as particular buildings may be outlined or highlighted. As yet another example, an object obstructing the entrance to a building may be removed.

The input image can be modified to outline particular objects. For example, when the navigation route is to be outlined, the boundary between the street and the sidewalk may be outlined with a white line. Accordingly, the method can comprise distinguishing streets from sidewalks using techniques such as contrast enhancement, edge extraction and the like, for example as described herein.

An object can be outlined by changing the colour of the pixels corresponding to the extracted edges of the object. The outline may be a continuous solid line or a line pattern such as a dashed or dotted line. The colour may be changed to a predetermined value, changed from its initial colour by a predetermined amount, or a combination thereof, or the like, so as to make the outline readily identifiable.

The input image can be modified to highlight particular objects in the input image. For example, a particular restaurant or street in the image may be highlighted in yellow. The object may be identified using object recognition techniques known in the art.

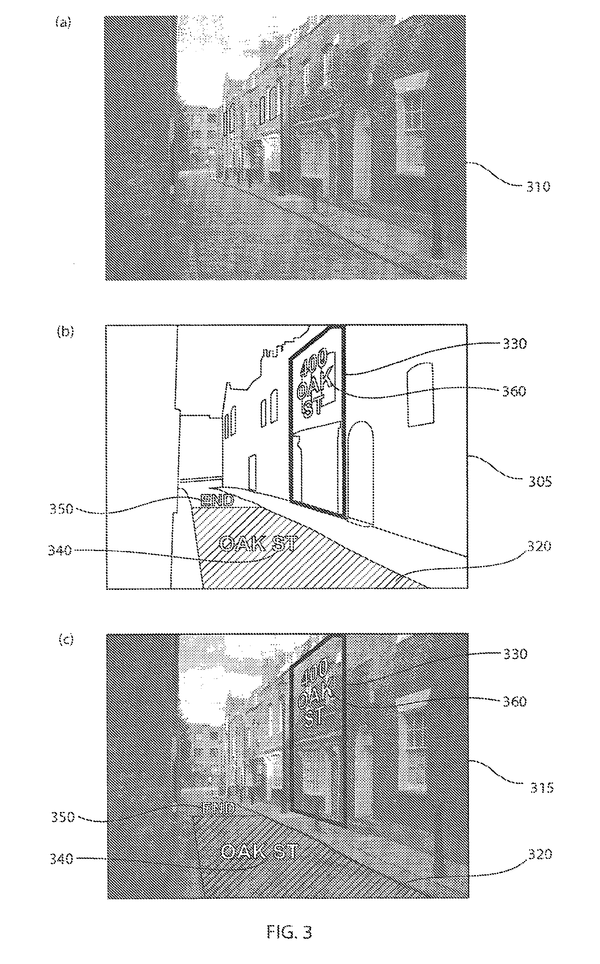

An object can be highlighted by modifying the colour of the pixels corresponding to the object in the input image. Objects in the input image may be highlighted with a uniform translucent or opaque color or with a pattern such as a hatched pattern. FIG. 3 is an exemplary illustration of modifying an input image to highlight and outline particular objects in accordance with embodiments of the present technology. FIG. 3(a) shows an image of a street as captured by a camera. Accordingly, FIG. 3(a) may be considered to be the input image **310** for the purposes of this example. FIG. 3(b) is a line drawing **305** of the input image **310** indicating the main features of the input image as well as the modifications to highlight **320,** outline **330** and add objects **340, 350, 360.** For clarity, hatched lines have been used to represent a translucent highlight. FIG. 3(c) shows the resulting output image created by modifying the obtained input image **310** to highlight a navigation route **320** and outline a destination **330.** Additionally, text objects **340, 350** and **360** respectively indicating the street name, end of the route and the destination address have been added to the input image. The input image can be modified to add rendered objects on the input image. The objects may be navigational objects or other objects. The rendered object can comprise a rendered outline of the object (for example, a wireframe outline). The outline may be a line rendered with a predetermined point size or dash pattern.

A rendered object can comprise a rendered body. The object may be rendered by filling its interior with a pattern, color or color gradient. For example, the object may be rendered with a uniform color or a hatch pattern. The object may be rendered as opaque or translucent.

Both the outline and body of an object can be rendered. Accordingly, the outline may be rendered to be distinct from the body of the object.

The object may be rendered as a planar and two-dimensional object or as a three-dimensional object. Objects can be rendered to match the depth and perspective of the input image.

The rendered object can correspond to an existing object in the input image. For example, the outline of a building in the input image may be rendered. The outline may be rendered, at least in part, by utilizing the recognized edges of the building. Similarly, an object in the input image may be highlighted by filling the interior of the rendered object with the desired highlight colour, or modifying all or a portion of the rendered object colour so as to make it stand out as an object of interest.

The rendered objects can be indicative of a part of an object in the input image. For example, the input image may be modified to render a particular lane on a multi-lane highway.

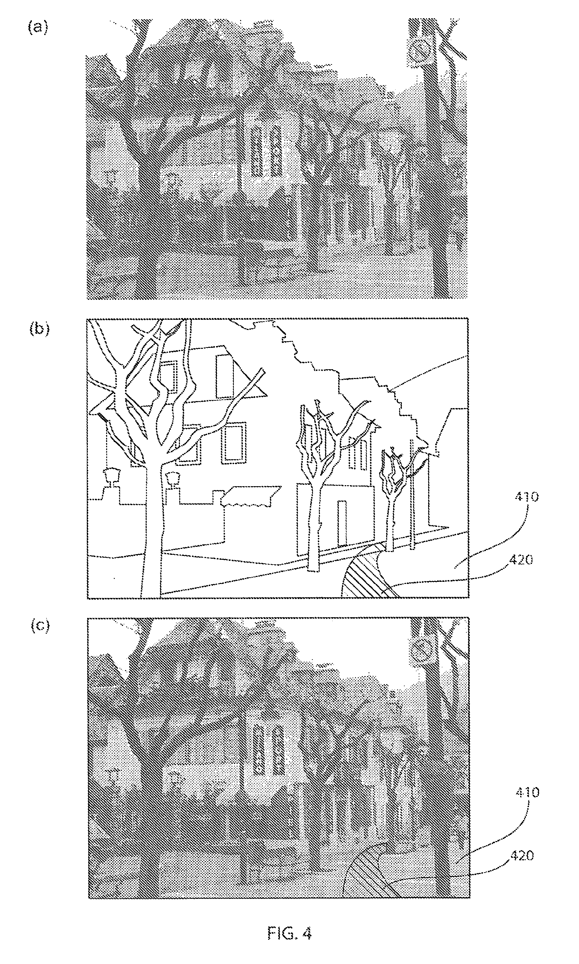

The rendered object can be indicative of an imaginary object. For example, for a pedestrian navigating a route through an open space such as a field or a square, an outline of the navigation route through the field or square (i.e. a "route" shaped object) may be rendered on top of the field or square as recognized in the input image. The route object may be scaled and shaped at least in part based on the recognizing of the square, streets and buildings around the square, and optionally other objects such as trees etc. on the square. Referring to FIG. 4, a pedestrian navigation route through a square is exemplarily rendered on an input image. FIG. 4(a) shows an input image as obtained from a camera, FIG. 4(b) is a line drawing of the obtained input image indicating the square **410** and the rendered pedestrian route **420** through the square. FIG. 4(c) shows the output image created by rendering a navigation route **420** on the square **410** of the input image.

The input image can be modified to render objects on the input image that may be at least partially missing from the input image as captured by the image-capturing device.

The rendered object can be indicative of an object interior to or otherwise obstructed by an object in the input image. For example, the image may be modified to render an outline of a path obstructed by a vehicle or to render an object indicating a café inside a building.

The rendered object can be indicative of an object partially or completely obscured in the image due to poor visibility conditions such as fog or poor light. Accordingly, the input image may be modified to add objects to aid navigation in poor visibility conditions. For example, the outline of a path not clearly visible due to foggy conditions may be added to the input image.

The rendered object can overlap, at least partially, with one or more objects in the input image. The rendered object may be, at least partially, in front of or behind other objects in the input image. The rendered object may be, at least partially, in front of some objects as well as at least partially behind other objects in the input image. For example, the street to be highlighted may be partially blocked by a car on the street. Accordingly, in order to highlight the street, the rendered street object can be placed behind the car.

The input image may be modified to add textual objects. The text may be related to navigation instructions, speed of travel, time or distance remaining to destination, information related to objects in the field of view, weather information, or other information. For example, the text may be added to label streets and landmarks in the input image.

The input image can be modified to add symbolic objects. Exemplarily, a left turn icon may be added to indicate an upcoming turn.

Objects added to the input image can be based on a user specification or a user preference. For example, a user may select a mode where the street names will be displayed but not other points of interest.

As another example, the user can select a "parking" mode when attempting to park a car. The input image, in this mode may be modified to render an outline of a car, scaled to have the size of the user's car and placed in various possible parking spots in the vicinity to indicate to the user whether or not the car will fit in that spot.

A user may select an object in an input image which will be highlighted whenever it appears in the field of view. For example, the user may specify a destination by selecting a landmark in the input image. Accordingly, the landmark may then be highlighted whenever it appears in the field of view. As another example, a tourist wandering around in a neighbourhood can keep themselves oriented with respect to a particular building or a tree in a park by specifying that it always be outlined when it appears in the field of view. An indication of the landmark can be included in the output image even when it is obstructed. When the landmark is not within the field of the output image, an arrow may appear at an edge of the output image indicating the location of the landmark.

render the navigation route and to render one or more alternate or additional navigation routes. The navigation routes or paths are ranked or prioritized based on different parameters such as condition of route, length of route, difficulty of route, parameters related to terrain such as elevation changes, congestion and traffic along route, time of day, and the like. The user may specify one or more preferred parameters or preferred routes. In some embodiments, the route may be rendered in a colour indicative of a ranking or priority level assigned to the route. For example, a preferred safe navigation route may be rendered in green while an alternate navigation route may be rendered in a red colour.

In some embodiments, the route is rendered in a colour, colour gradient or range of colours indicative of a particular aspect of the route. For example, the colour of the route may be indicative of aspects such as elevation, changes in elevation, condition of the route, and the like.

The input image can be modified to improve user perceptibility. For example, image properties such as the colour, saturation, brightness, contrast, size of image or field of view may be configured to facilitate perception of objects in the output image.

In some embodiments, the input image is modified to change the colour of one or more objects. The colour of substantially the entire image can be modified. For example, the input image may be modified to be in monochrome while one or more objects (such as the navigation route or the building comprising the destination) may be rendered in colour.

### Rendering objects

The objects added to the input image are rendered based, at least in part, on one or more objects recognized in the image.

The objects added to the input image can be placed or aligned based, at least in part, on one or more objects recognized in the image. For example, a text label for a street in the input image may be placed on the object recognized as "First Street" in the image. As another example, a path through a park may be placed in the middle of the object recognized as the park in the image.

Objects can be rendered at least in part based on the location, size and shape of one or more objects in the image. For example, the rendered route object **420** in FIG. 4 is scaled for the size of the object recognized as square in the input image. The path is shaped based on detecting in the input image, the user's current location and the street to which the user is headed.

The objects added to the input image can be placed or aligned based, at least in part, on the context. For example, in order to indicate an upcoming left turn to a user traversing a route along "First Street", a left turn arrow may be placed on the object recognized as "First Street".

The colour in which an object can be rendered is selected based on the colour of one or more objects recognized in the input image. For example, the text may be in a dark colour if placed on a light background of sky but light if placed on a dark background of trees.

The rendering of objects may be indicative of the objects being navigational objects or other objects. For example, the colour, texture or outline pattern of the rendered navigation route may be selected to be different from that used for other objects.

Objects can be rendered at least in part using maps and other images stored in a database. For example, when the view of the street ahead is blocked by a vehicle, maps and images in the database may be retrieved and utilized to determine how the street continues beyond the blocking vehicle. For example, the street may continue straight then turns right after 10m. Accordingly, an outline of the route beyond the vehicle may be rendered, based on the information retrieved from the database, and placed on top of the vehicle in the image, or otherwise blended into the image to convey continuity of the route past the obstruction.

An object can be rendered by modifying a previously rendered object in accordance with information obtained about the motion of the image capturing device. Accordingly, a previously rendered object, such as a building or street, may be moved, rotated, scaled based on knowledge of the translational, rotational or tilt movement of the image-capturing device. A worker skilled in the art will be familiar with various techniques for transforming objects. Exemplarily, an outline of a building may be rendered on a first input image. If the image-capturing device is known to have moved 20m towards the building, the rendered outline of the building may be scaled accordingly for the subsequent input image. Such scaling of a building may further depend on the initial and final absolute distance to the building, along with other factors.

Objects may be rendered using rendering techniques familiar to a worker skilled in the art (for example, pixel-by-pixel rendering, rasterization, ray casting, etc.). The selection of rendering technique used may depend on processing capacity, processing time available, frame rate for capturing images or updating images on the display.

### Generating the Output Images

The output image can be created by modifying pixels in the input image. The pixels modified correspond to the one or more objects to be modified or added to the input image. For example, when an object (for example a building) is to be highlighted, the object representing the building is first identified in the image using object recognition techniques. Then, the colour of the pixels corresponding to the building is modified to show the building as highlighted in that colour. Similarly, an object may be outlined by modifying the colour of the pixels that correspond to the edges of the object in the input image.

The output image can be created by modifying a subset of the pixels in the input image corresponding to an object to be modified or added. For example, in order to highlight the navigation route with a translucent effect, a subset of the pixels (in an alternating hatch pattern) corresponding to the navigation route may be changed in colour. Similarly, a navigation route may be outlined by a dotted or dashed line by modifying the colour of a subset of pixels (in the appropriate pattern for producing a dashed or dotted effect) representing the edges of the route.

Objects to be added to the input image can be placed on one or more layers distinct from the layer containing the input image. The output image is created by combining the layers with the input image using techniques for combining layers as would be readily known to a worker skilled in the art. For example, the output image may be created by combining a first layer containing the input image with a second layer containing the rendered route.

Objects added to the input image may be translucent or opaque. A worker skilled in the art will be familiar with various methods of indicating the degree of transparency of a pixel and for combining or blending layers with overlapping objects of different transparency. For example, in alpha compositing techniques for combining overlapping objects of differing transparency, the degree of transparency may be indicated by an alpha value defined to range between 0 for completely opaque to 1 for completely transparent. The transparency of each pixel may be stored in its alpha channel. The layers may be combined using alpha compositing rules which would be readily known to a worker skilled in the art.

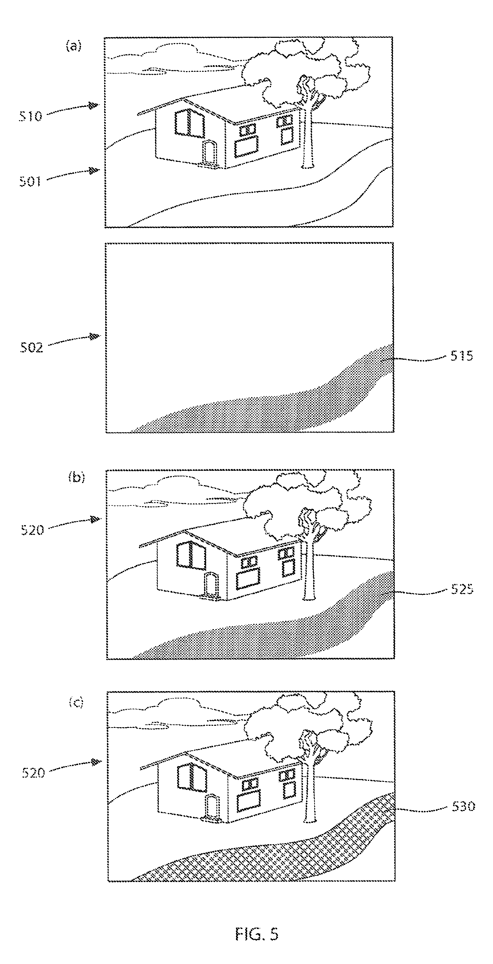

FIG. 5 illustrates an exemplary method of creating an output image to highlight a street in the input image in accordance with embodiments of the present technology. FIG 5(a) shows the input image **510** on a first (bottom) layer **501.** For purposes of illustration, the input image **510** is depicted as a line drawing. A second (top) layer **502** is created and an object corresponding to the street **515** is rendered on this layer. The street is rendered by filling the pixels on the second (top) layer **502** corresponding to the street **515** with the desired highlight colour (for example, grey in FIG. 5(a)). The two layers may be combined to produce an output image **520** as shown in FIG 5(b) or 5(c). For a street rendered as opaque, the layers **501** and **502** will be combined such that the pixels **525** of the output image **520** in the position of the street **515** will be substantially entirely those of the top layer **502** as shown in FIG 5(b). As shown in FIG 5(c), if a translucent effect is desired for the highlighted street in the output image **520,** the pixels **530** of the output image **520** in the position of the street, will alternately be those of the input image on the bottom layer and the rendered street on the top layer.

A plurality of objects can be added to the input image to create the output image. The objects may be placed on the same layer or on different layers. Accordingly, each layer may comprise one or more objects. An object on a layer may be individually positioned and altered without affecting other objects on that layer or on other layers.

A rendered objects can overlap with other rendered objects or objects in the input image. The rendered objects may be placed in front of some objects and behind other objects. Placing a first object in front of other objects may be accomplished by placing the first object in a top layer and placing objects behind the first object in lower layers and so on. The overlapping objects placed on different layers may be combined sequentially using information about the transparency of the objects on each layer.

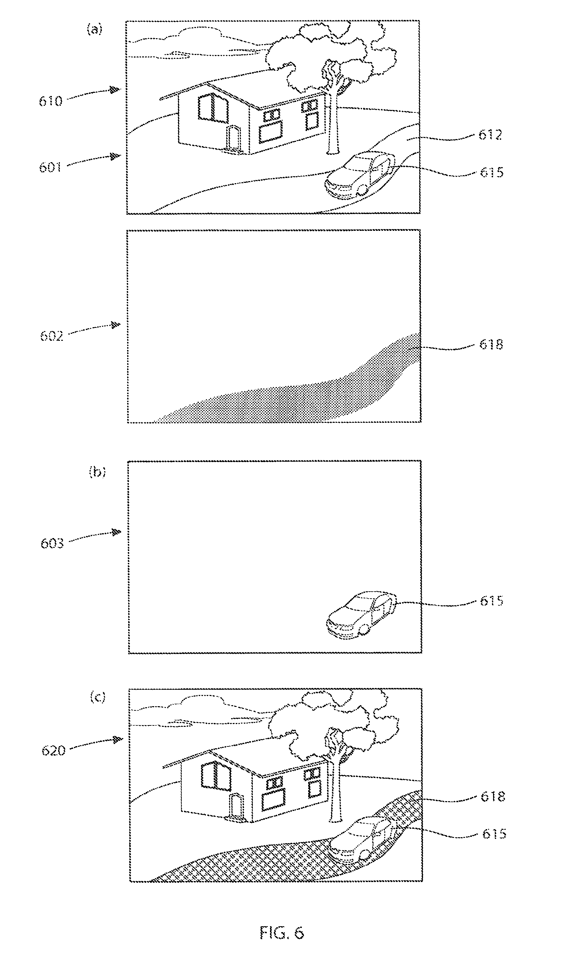

FIG. 6 illustrates an exemplary method of combining layers containing overlapping objects in accordance with the present technology. FIG. 6 (a) shows an exemplary input image **610** with a street **612** and a car **615** on the street **612.** For purposes of illustration, the input image is shown as a line drawing. In order to render a navigation route comprising on this street **612,** the "rendered route" object **618** has to be placed above the "street" **612** in the image but below the "car" **615** of the image. Exemplarily, this may be achieved by processing the input image to recognize the pixels corresponding to the car **615** and creating a third layer with pixels corresponding to the car. In this example, the first (bottom) layer **601** comprises the input image **610,** the second (middle) layer **602** comprises the rendered route **618** and the third (top) layer **603** comprises the car **615** of the input image **610.** Additionally, the pixels corresponding to the car on the third layer may be defined as opaque and the pixels on the second layer corresponding to the rendered route may be defined to be "translucent". The output image **620** is created by combining the layers **603, 602,** and **601,** from top to bottom such that in the position of the car **615,** the pixels of the output image contain pixels of the third layer **603.** The pixels of the output image in the position of the rendered route **618** contain pixels alternately taken from the second layer **602** and the first layer **601.** In the remaining parts of the output image, the pixels correspond to the pixels of the input image taken from the first layer **601.**

Objects added to the input image for the formation of the output image can be updated at different rates. Objects on a layer may be updated at the same rate while objects on different layers may be updated at different rates. For example, one layer may contain objects that are relatively static (for example text indicating the temperature) while another layer may contain more dynamic objects (for example the rendered route). Accordingly, some layers integrated with the input image may be updated more frequently than others.

### Presenting the Output Image

As mentioned above, an output image, formed by processing the input image to integrate navigational information, is presented on the mobile device.

As mentioned previously, the input image may need to be re-sampled if the pixel dimension of the image capturing device are different from those of the display module. In some embodiments, the input image is re-sampled before processing of the input image. In some embodiments, the input image is re-sampled after it has been processed to recognize objects and before objects have been rendered. In some embodiments, the re-sampling is performed after the input image has been modified to integrate navigation information and before the resulting output image is displayed on the display module.

There can be a delay time between capturing of an input image and presentation of the corresponding output image. The delay time may be fixed and predetermined. For example, the delay time may be based on the parameters such as amount of processing required, the processing capacity, the frame rate at which the input image is obtained, delay to compensate for vibrations, or other sources of delay. Aspects of processing of the input image, such as selection of rendering or recognition algorithms, can be based, at least in part, on the delay time.

The delay time can be variable and a maximum delay time is defined. The maximum delay time can be defined based on the motion of the mobile device. For example, the output image may be updated more frequently when the mobile device is moving more rapidly so that the image on the display corresponds closely to the user's view. The motion may be either related to changes in location or orientation. If a delay time is expected to exceed a maximum delay time, the delay time may be reduced, for example by sacrificing image quality.

If the processing time for integrating navigational information with the input image exceeds the maximum delay time, an intermediate output image can be presented for display while the processing continues. In some embodiments, the intermediate output image is the input image as captured. The intermediate output image can be the input image at an intermediate stage of processing, for example, when some of the layers containing navigational information have been updated and integrated with the input image but other layers have not yet been updated or integrated.

The output image is presented on one or more displays associated with the mobile device. The presentation of the output image can be accompanied by audio alerts and notifications presented on an audio output device such as a speaker. The presentation of the output image can also be accompanied by tactile alerts. For example, a tactile or audio alert may be issued to indicate that the image capturing device is facing away from the navigation route.

### Computer Program Product

Acts associated with the method described herein can be implemented as coded instructions in a computer program product. In other words, the computer program product is a computer-readable medium upon which software code is recorded to execute the method when the computer program product is loaded into memory and executed on the microprocessor of the mobile device.

Acts associated with the method described herein can be implemented as coded instructions in plural computer program products. For example, a first portion of the method may be performed using one mobile device, and a second portion of the method may be performed on another mobile device or a device such as a server, or the like. In this case, each computer program product is a computer-readable medium upon which software code is recorded to execute appropriate portions of the method when a computer program product is loaded into memory and executed on the microprocessor of a mobile device.

### Mobile Device

The present technology may be implemented on a mobile device. The mobile device may be a cellular telephone, satellite telephone, smartphone, PDA, laptop, net book, a tablet PC, a portable navigation system such as a handheld or vehicular GPS unit, or another device that can be configured to allow a determination of its location. Additional types of mobile devices would be readily known to a worker skilled in the art.

The mobile device can comprise a display control module. The display control module may be configured to obtain one or more input images and one or more output images and to control presentation of the obtained output images which are generated by obtaining navigational information and processing the input image at least in part based on the obtained navigational information, for example to integrate said navigational information.

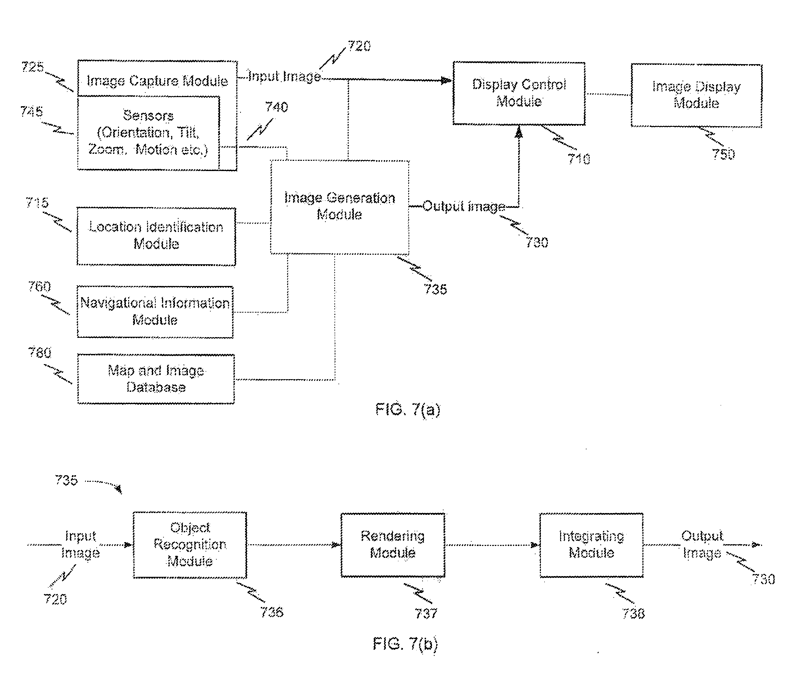

FIG. 7(a) is a schematic of an exemplary configuration utilizing a display control module in accordance with present technology. The display control module **710** obtains one or more input images **720** from an operatively linked image-capturing module **725.** The display control module **710** obtains one or more output images **730** from an operatively linked image generation module **735.** Optionally, additional parameters (tilt, motion, etc.) **740** may also be obtained by the display control module **710.** The display control module then provides the one or more output images for presentation by one or more operatively linked image display modules **750.**

A processing module may be operatively coupled with the display control module, image capturing module, the image generation module and the image display modules. The processing module may be configured to coordinate the functions of the various modules and to process different types of data using one or more processors. The processing module can be integrated with the display control module. The processing module can be the display control module. The processing module can comprise or be operatively associated with a memory module configured for storage of different types of data. Appropriate processing and memory modules would be readily understood by a worker skilled in the art.

The mobile device can comprise a location identification module **715.** The location identification module is configured to allow a determination of location of the mobile device.

The location identification module can comprise a GPS receiver. Although the present disclosure refers expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, India, Morocco, Saudi Arabia and South Korea, Russia's GLONASS system, India's proposed Navigational Satellite System (IRNSS), and Japan's proposed QZSS regional system.

The mobile device can comprise an image-capture module **725** configured to capture one or more images. In some embodiments, the image-capture module may be integrated or operatively coupled with one or both of the display control module and the image generation module.

The image-capture module can be integrated or operatively associated with sensors **745** such as tilt sensors, orientation sensors, accelerometers, light sensors and the like. Sensor modules can be further configured to process signals detected by the sensors.

The mobile device can comprise one or more image parameter modules configured to determine parameters indicative of the captured images including but not limited to tilt parameter, orientation parameter, zoom parameter, motion parameter, and light parameter. The image parameter modules can be integrated or operatively connected with the respective sensor modules. The image parameter modules may be integrated or operatively connected with one or both of the display control and image generation modules.

The mobile device can comprise one or more image display modules **750.** The image display modules may be communicatively coupled or integrated with one or more of the display control module, the image generation module and the image-capture module.

The image generation module **735** is configured to obtain one or more input images from an image capture module and generate one or more output images at least in part based on the obtained input image. In some embodiments, the image generation module generates the one or more output images by processing the obtained one or more input images to integrate navigational information obtained from a communicatively linked navigational information module **760** wherein processing the one or more input images includes recognizing one or more objects in the one or more input images.

The mobile device can be communicatively linked to an image generation module **735.** In some embodiments, the image generation module **735** is located remotely at one or more servers accessed via a network.

The mobile device can comprise an image generation module **735.** The image generation module may be integrated or operatively linked with the display control module **715.** The image generation module may be integrated or operatively linked with the image-capture module.

An image generation module can be communicatively linked to one or more map and image databases 780 storing map and image information. One or more map and image databases can be stored locally in the image generation module. One or more map and image databases can be communicatively linked to the image generation module. The map and image databases can be located remotely at one or more map and image servers accessed via a network.

Referring to FIG. 7(b), an image generation module in accordance with the present technology is shown. The image generation module **735** comprises an object recognition module **736** configured to process the input image to recognize one or more objects. The image generation module **735** also comprises an object rendering module **737** configured to render objects indicative of navigational information and at least in part based one or more objects recognized in the input image. The image generation module **735** also comprises an integration module **738,** configured to integrate the navigational information with the input image.

The processing required for the generation of the output image may be performed by the mobile device, by a server managed exemplarily by a service and application provider, or by a combination of both. Information used in said processing may at least partly be stored on the mobile device, on a server of a service and application provider, or on a server of a data and content provider communicatively linked with the appropriate processing entities, such as described above, or a combination thereof. The distribution of the processing burden can be based on the amount of data available for processing and the available communication bandwidth for data transfer between the various processing entities.

Referring to FIG. 7(a) the mobile device can comprise a navigational information module **760** configured to obtain location data from the location identification module and generate navigational information, such as navigational instructions, at least in part based on the obtained location data. One or more map databases with map information can be stored locally in the navigational information module. One or more map databases can be communicatively linked to the navigational information module. The map databases can be located remotely at one or more map servers accessed via a network. The navigational information module may be integrated or operatively coupled with one or both of the location identification module and the image generation module.

One or more remote servers can monitor the current location of a user, for the purpose of obtaining real-time information, such as traffic updates and other location based services. Accordingly, the mobile device may be configured to regularly update its location information with the server. The server also can serve to provide navigation information based, at least partly, on the current location of a user. Accordingly, the mobile device may be configured to provide other route related requests to the server.

The mobile device can comprise one or more sensing modules including but not limited to light sensors and accelerometers. The sensor modules can be further configured to process signals detected by the sensors.

The mobile device can be communicatively coupled to one or more external devices. For example, the mobile device may be coupled to a windshield mounted camera or to car stereo speakers and display. The mobile device may be communicatively coupled to the external devices by means of a wireless or a hard-wired connection. Wireless communication can be achieved using any short-range or long-range communication protocols that may be readily known to a worker skilled in the art. For example, the mobile device may be linked to some external devices using Bluetooth™ and to others using radio frequency transmission. Accordingly, the mobile device may comprise additional short-range and long-range communication modules. Examples of short-range communications modules include a Bluetooth^{™} module, an infrared module with associated circuits and components, and a TEL MUTE line for communication with similarly linked devices.

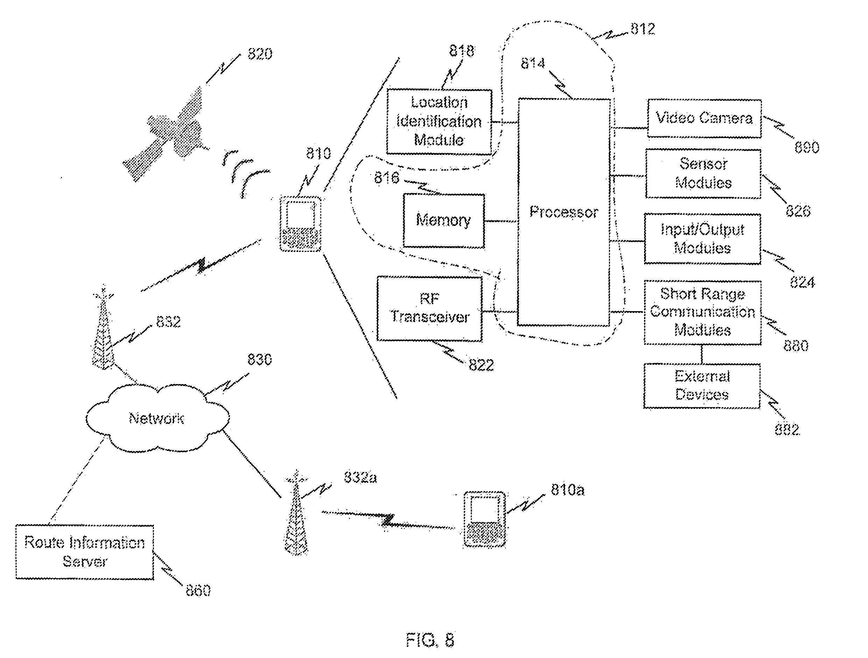

FIG. 8 shows a block diagram depicting certain main components of an exemplary mobile device **810** with wireless communications capability in accordance with the present technology. It should be understood that this figure is intentionally simplified to show only certain components; the mobile device **810** may include other components beyond those shown in FIG. 8.

The mobile device **810** is operatively associated with a GPS system **820** allowing for determining its location. The mobile device **810** is linked to a cellular network **830** through a base-station **832,** and thereby to one or more servers of a service and application provider, and to one or more servers of a data and content provider. Additional mobile devices **810a** may be linked to the cellular network **830** using the same base station **832** or a separate base station **832a.** The cellular network **830** thus serves for data transfer between peer mobile devices **810, 810a.**

The mobile device **810** further comprises a location identification module **818,** which is configured to determine the location of the mobile device. The location identification module **818** includes a GPS receiver chipset for receiving GPS radio signals transmitted from the one or more orbiting GPS satellites **820.** The GPS receiver chipset can be embedded within the device or externally connected, such as, for example, a Bluetooth^{™} GPS puck or dongle. Other systems for determining location may be used in place of GPS, as would be readily understood by a worker skilled in the art. Navigational notifications are generated at least in part based on location data from the location identification module **818.**

The device **810** comprises a processing module **812,** which includes a microprocessor **814** (or simply a "processor") and operatively associated memory **816** (in the form of RAM or flash memory or both), to enable a variety of device functions and to execute an operating system for running software applications loaded on the device. The processing module **812** is configured to obtain one or more input images exemplarily from a video camera **890,** to obtain navigational information and instructions exemplarily from a remote server, to generate an output image and to control the display of the output image exemplarily by one or more displays **824.** The output image is generated by processing the input images to integrate the obtained navigational information wherein processing the input images includes recognizing one or more objects in the input images.

The mobile device **810** includes a radiofrequency (RF) transceiver **822** for communicating wirelessly with the base station **832** of a wireless network **830.** The base station **832** may be a cellular base station, wireless access point, or the like. The base station **832** may vary as the mobile device travels, for example, using well-known handoff processes in cellular networks. The RF transceiver **822** may optionally be alternatively or additionally used for communicating directly with a peer device such as a third party mobile device, for example as may occur in some ad-hoc networks. The RF transceiver enables access to a wireless communication channel for transmitting and receiving data. The RF transceiver **822** may further allow for a wireless voice channel for transmitting and receiving voice communications, for example concurrently with transmission and reception of data over the same or a separate logical or physical channel.

The mobile device **810** sends and receives communication signals via the RF transceiver **822.** When communicating wirelessly with a base station **832** of a wireless network **830,** the mobile device **810** may communicate in accordance with one or more appropriate technologies such as: Global Systems for Mobile communications (GSM), General Packet Radio Service (GPRS), Code Division Multiple Access (CDMA) technologies, Wideband CDMA (WCDMA), whether 2G, 3G, High speed packet access (HSPA), Universal Mobile Telecommunication System (UMTS) based technologies, Long Term Evolution (LTE) technologies, Orthogonal Frequency Division Multiplexing (OFDM) technologies, Ultra-Wideband (UWB) technologies, WiFi^{™} or WiMAX^{™} technologies, or other communication technologies and protocols as would readily be understood by a worker skilled in the art. The mobile device **810** may be capable of operation using multiple protocols. The base station **832** may be part of a wireless network, such as a cellular network, local-area network, wide-area network, wireless hotspot network, or the like. The mobile device, base station, network components, and the like, may be configured for data communication, voice communication, or a combination thereof, possibly using additional components, configurations and procedures where appropriate, such as SIM cards, authorization and authentication procedures, handoff procedures, and the like, as would be readily understood by a worker skilled in the art.

Referring to FIG. 8, the mobile device **810** is linked to route information servers **860** which may include public or private route information servers. The route information servers are typically map servers that provide map data to networked computing devices or mobile devices upon request, for example, in vector format or alternatively as bitmaps. In addition to providing the map data, the route information servers (e.g. the map servers) can also provide route instructions or route directions which are turn-by-turn instructions for each decision point along the route. These route information servers are communicatively connected to the for transmitting route information to each mobile device **810** in response to location data received from each mobile device. The "location data" comprises (1) the current location of the respective mobile device, e.g. its GPS position fix, which is used to represent the starting location, and (2) the destination location, which has been received wirelessly from the sender. The location data may also include a default location that has been specified, set or preconfigured by the sender or by the recipient for use in generating the route information in the event that the current location cannot be determined.

The mobile device comprises one or more input/output devices or user interfaces (UI's) **824.** The mobile device **810** may include one or more of the following: a display (e.g. a small LCD screen), a thumbwheel and/or trackball, a keyboard, a touch screen, a keypad, a button, a speaker, a still camera and a video camera. The mobile device comprises one or more sensor modules **826** including but not limited to a microphone, an orientation sensor, an accelerometer, a light sensor etc.

The mobile device comprises short-range communication modules **880** for communication between the mobile device and other similarly enabled external devices **882.** For example, short-range communication modules **880** may include a Bluetooth communication module for communicating with a windshield mounted camera or a car stereo display. These devices **882** may also be used exemplarily to obtain information about the current location or to display navigational information.

This technology has been described in terms of specific implementations and configurations (and variants thereof) which are intended to be exemplary only. The scope of the exclusive right sought by the applicant is therefore intended to be limited solely by the appended claims.

## Claims

1. A method (100) of presenting navigational information on a mobile device, the mobile device being configured to determine its location, the method comprising:
obtaining (130) one or more input images;
generating (140) one or more output images by obtaining navigational information for the mobile device and processing (200) the one or more input images to integrate the obtained navigational information, wherein processing the one or more input images includes recognizing one or more objects in the one or more input images and said processing the one or more input images further comprises rendering one or more objects ; and
providing (150) the one or more output images for presentation;
**characterised in that** the one or more rendered objects comprise rendered route objects indicative of two or more navigation routes, each navigation route being assigned a ranking based on one or more route parameters and wherein the rendered route objects are further indicative of said ranking.

2. The method (100) of claim 1 wherein recognizing one or more objects comprises recognizing one or more navigational objects, each navigational object indicative of one or more navigational instructions.

3. The method (100) of claim 1 or 2, wherein at least one recognized object is recognized based on a user specification.

4. The method (100) of claim 1, wherein the ranking is based on one or more of: condition of the route, length of the route, difficulty of the route, parameters relating to terrain of the route, congestion and traffic along the route and time of day.

5. The method (100) of claim 1 wherein modifying (220) the one or more input images comprises modifying colour of one or more objects depicted therein.

6. The method (100) of claim 1 wherein modifying (220) the one or more input images comprises adding one or more objects, modifying one or more objects or removing one or more objects of the one or more input images.

7. The method (100) of claim 1, wherein colour of the rendered route objects is indicative of said ranking.

8. The method (100) of claim 1, wherein at least one of the rendered objects is indicative of a destination.

9. The method (100) of claim 8 wherein said destination is determined by recognizing one or more objects in said input image.

10. The method (100) of any of claims 1 to 9 wherein said processing is performed, at least in part, by a communicatively linked remote server.

11. A mobile device (810) configured to present navigational information, the mobile device (810) being configured to determine its location, the mobile device comprising:
a display control module (710) configured to obtain one or more input images, and provide one or more output images for presentation;
wherein:
the display control module is further configured to generate the one or more output images by obtaining navigational information for the mobile device and processing the one or more input images to integrate the obtained navigational information; wherein processing the one or more input images comprises recognizing one or more objects in the one or more input images and said processing the one or more input images further comprises rendering one or more objects; **characterised in that** the one or more rendered objects comprise rendered route objects indicative of two or more navigation routes, each navigation route being assigned a ranking based on one or more route parameters and wherein the rendered route objects are further indicative of said ranking.

12. The mobile device (810) of claim 11, further comprising one or more of the following:
(i) an image capture module (725) communicatively linked to the display control module (710) and configured to capture the input images and provide the input images to the display control module (710);
(ii) an image display module (750) communicatively linked to the display control module (710) and configured to present the output images;
(iii) an orientation sensor module (745) operatively linked to the image capture module (725) and configured to sense orientation of the image capture module;
(iv) a tilt sensor module (745) operatively linked to the image capture module (725) and configured to sense a tilt angle of the image capture module; and
(v) a motion sensor module (745) operatively linked to the image capture module (725) and configured to sense motion of the image capture module (725).

13. A computer program product for presenting navigational information for a mobile device configured to determine its location, said computer program product comprising code which, when loaded into a memory and executed on an associated processor, is adapted to perform the following:
obtaining (130) one or more input images;
generating (140) one or more output images by obtaining navigational information for the mobile device and processing (200) the one or more input images to integrate the obtained navigational information, wherein processing the one or more input images comprises recognizing one or more objects in the one or more input images and said processing the one or more input images further comprises rendering one or more objects ; and
providing (150) the one or more output images for presentation;
**characterised in that** the one or more rendered objects comprise rendered route objects indicative of two or more navigation routes, each navigation route being assigned a ranking based on one or more route parameters and wherein the rendered route objects are further indicative of said ranking.

## Patentansprüche

1. Ein Verfahren (100) zum Präsentieren von Navigationsinformation auf einer mobilen Vorrichtung, wobei die mobile Vorrichtung konfiguriert ist, ihre Position zu bestimmen, wobei das Verfahren aufweist:
Erlangen (130) eines Eingangsbifds oder mehrerer Eingangsbilder;
Erzeugen (140) eines Ausgabebilds oder mehrerer Ausgabebilder durch Erlangen von Navigationsinformation für die mobile Vorrichtung und Verarbeiten (200) des einen Eingangsbilds oder der mehreren Eingangsbilder, um die erlangte Navigationsinformation zu integrieren, wobei das Verarbeiten des einen Eingangsbilds oder der mehreren Eingangsbilder ein Erkennen eines Objekts oder mehrerer Objekte in dem einen oder den mehreren Eingangsbild(ern) aufweist und das Verarbeiten des einen Eingangsbilds oder der mehreren Eingangsbilder weiter ein Darstellen eines Objekts oder mehrerer Objekte aufweist; und
Vorsehen (150) des einen Ausgabebilds oder der mehreren Ausgabebilder zur Präsentation,
**dadurch gekennzeichnet, dass**
das eine oder die mehreren dargestellten Objekt(e) dargestellte Routenobjekte aufweist/aufweisen, die für zwei oder mehr Navigationsrouten indikativ sind, wobei jeder Navigationsroute eine Rangfolge basierend auf einem oder mehreren Routenparameter(n) zugewiesen wird und wobei die dargestellten Routenobjekte weiter indikativ sind für diese Rangfolge.

2. Das Verfahren (100) gemäß Anspruch 1, wobei das Erkennen eines Objekts oder mehrerer Objekte aufweist ein Erkennen eines Navigationsobjekts oder mehrerer Navigationsobjekte, wobei jedes Navigationsobjekt indikativ ist für eine oder mehrere Navigationsanweisung(en).

3. Das Verfahren (100) gemäß Anspruch 1 oder 2, wobei zumindest ein erkanntes Objekt basierend auf einer Benutzerspezifikation erkannt wird.

4. Das Verfahren (100) gemäß Anspruch 1, wobei die Rangfolge auf einem oder mehreren basiert aus: Zustand der Route, Länge der Route, Schwierigkeit der Route, Parameter bezüglich eines Geländes der Route, Stau und Verkehr entlang der Route und Tageszeit.

5. Das Verfahren (100) gemäß Anspruch 1, wobei das Modifizieren (220) des einen Eingangsbilds oder der mehreren Eingangsbilder ein Modifizieren einer Farbe von einem oder mehreren darin gezeigten Objekt(en) aufweist.

6. Das Verfahren (100) gemäß Anspruch 1, wobei das Modifizieren (220) des einen Eingangsbilds oder der mehreren Eingangsbilder ein Hinzufügen eines Objekts oder mehrerer Objekte, ein Modifizieren eines Objekts oder mehrerer Objekte oder ein Entfernen eines Objekts oder mehrerer Objekte des einen Eingangsbilds oder der mehreren Eingangsbilder aufweist.

7. Das Verfahren (100) gemäß Anspruch 1, wobei die Farbe der dargestellten Routenobjekte für die Rangfolge indikativ ist.

8. Das Verfahren (100) gemäß Anspruch 1, wobei zumindest eines der dargestellten Objekte für ein Ziel indikativ ist.

9. Das Verfahren (100) gemäß Anspruch 8, wobei das Ziel bestimmt wird durch Erkennen eines Objekts oder mehrerer Objekte in dem Eingangsbild.

10. Das Verfahren (100) gemäß einem der Ansprüche 1 bis 9, wobei das Verarbeiten zumindest teilweise durch einen kommunikativ-verbundenen entfernten Server durchgeführt wird.

11. Eine mobile Vorrichtung (810), die konfiguriert ist zum Präsentieren von Navigationsinformation, wobei die mobile Vorrichtung (810) konfiguriert ist, ihre Position zu bestimmen, wobei die mobile Vorrichtung aufweist:
ein Anzeigesteuerungsmodul (710), das konfiguriert ist zum Erlangen eines Eingangsbilds oder mehrerer Eingangsbilder und Vorsehen eines Ausgabebilds oder mehrerer Ausgabebilder zur Präsentation;
wobei:
das Anzeigesteuerungsmodul weiter konfiguriert ist zum Erzeugen des einen Ausgabebilds oder der mehreren Ausgabebilder durch Erlangen von Navigationsinformation für die mobile Vorrichtung und Verarbeiten des einen Eingangsbilds oder der mehreren Eingangsbilder, um die erlangte Navigationsinformation zu integrieren; wobei das Verarbeiten des einen Eingangsbilds oder der mehreren Eingangsbilder ein Erkennen eines Objekts oder mehrerer Objekte in dem einen oder den mehreren Eingangsbild(ern) aufweist und das Verarbeiten des einen Eingangsbilds oder der mehreren Eingangsbilder weiter ein Darstellen eines Objekts oder mehrerer Objekte aufweist; **dadurch gekennzeichnet, dass** das eine oder die mehreren dargestellten Objekt(e) dargestellte Routenobjekte aufweist/aufweisen, die für zwei oder mehr Navigationsrouten indikativ sind, wobei jeder Navigationsroute eine Rangfolge basierend auf einem oder mehreren Routenparameter(n) zugewiesen ist und wobei die dargestellten Routenobjekte weiter indikativ sind für diese Rangfolge.

12. Die mobile Vorrichtung (810) gemäß Anspruch 11, die weiter eines oder mehrere der folgenden aufweist:
(i) ein Bildaufnahme-Modul (725), das kommunikativ mit dem Anzeigesteuerungsmodul (710) verbunden ist und konfiguriert ist, die Eingangsbilder aufzunehmen und die Eingangsbilder an das Anzeigesteuerungsmodul (710) zu liefern;
(ii) ein Bildanzeige-Modul (750), das kommunikativ mit dem Anzeigesteuerungsmodul (710) verbunden ist und konfiguriert ist, die Ausgabebilder zu präsentieren;
(iii) ein Ausrichtungssensor-Modul (745), das operativ mit dem Bildaufnahme-Modul (725) verbunden ist und konfiguriert ist, eine Ausrichtung des Bildaufnahme-Moduls zu erfassen;
(iv) ein Neigungssensor-Modul (745), das operativ mit dem Bildaufnahme-Modul (725) verbunden ist und konfiguriert ist, einen Neigungswinkel des Bildaufnahme-Moduls zu erfassen; und
(v) ein Bewegungssensor-Modul (745), das operativ mit dem Bildaufnahme-Modul (725) verbunden ist und konfiguriert ist, eine Bewegung des Bildaufnahme-Moduls (725) zu erfassen.

13. Ein Computerprogrammprodukt zum Präsentieren von Navigationsinformation für eine mobile Vorrichtung, die konfiguriert ist, ihre Position zu bestimmen, wobei das Computerprogrammprodukt Code aufweist, der bei einem Laden in einen Speicher und Ausführen auf einem assoziierten Prozessor ausgebildet ist, Folgendes durchzuführen:
Erlangen (130) eines Eingangsbilds oder mehrerer Eingangsbilder;
Erzeugen (140) eines Ausgabebilds oder mehrerer Ausgabebilder durch Erlangen von Navigationsinformation für die mobile Vorrichtung und Verarbeiten (200) des einen Eingangsbilds oder der mehreren Eingangsbilder, um die erlangte Navigationsinformation zu integrieren, wobei das Verarbeiten des einen Eingangsbilds oder der mehreren Eingangsbilder ein Erkennen eines Objekts oder mehrerer Objekte in dem einen oder den mehreren Eingangsbild(ern) aufweist und das Verarbeiten des einen Eingangsbilds oder
der mehreren Eingangsbilder weiter ein Darstellen eines Objekts oder mehrerer Objekte aufweist; und
Vorsehen (150) des einen Ausgabebilds oder der mehreren Ausgabebilder zur Präsentation;
**dadurch gekennzeichnet, dass**
das eine oder die mehreren dargestellten Objekt(e) dargestellte Routenobjekte aufweist/aufweisen, die für zwei oder mehr Navigationsrouten indikativ sind, wobei jeder Navigationsroute eine Rangfolge basierend auf einem oder mehreren Routenparameter(n) zugewiesen ist und wobei die dargestellten Routenobjekte weiter indikativ sind für diese Rangfolge.

## Revendications

1. Procédé (100) de présentation d'information de navigation sur un dispositif mobile, le dispositif mobile étant constitué pour déterminer sa localisation, le procédé comprenant :
l'obtention (130) d'une ou plusieurs images d'entrée ;
la génération (140) d'une ou plusieurs images de sortie en obtenant de l'information de navigation pour le dispositif mobile et en traitant (200) les une ou plusieurs images d'entrée pour intégrer l'information de navigation obtenue, dans lequel le traitement des une ou plusieurs images d'entrée inclut la reconnaissance d'un ou plusieurs objets dans les une ou plusieurs images d'entrée et ledit traitement des une ou plusieurs images d'entrée comprend en outre le rendu d'un ou plusieurs objets ; et
la fourniture (150) des une ou plusieurs images de sortie pour présentation,
**caractérisé en ce que** les un ou plusieurs objets rendus comprennent des objets rendus de route représentatifs de deux routes de navigation ou plus, chaque route de navigation étant assortie d'un rang basé sur un ou plusieurs paramètres de route et dans lequel les objets rendus de route sont en outre représentatifs dudit rang.

2. Procédé (100) selon la revendication 1, dans lequel la reconnaissance d'un ou plusieurs objets comprend la reconnaissance d'un ou plusieurs objets de navigation, chaque objet de navigation étant représentatif d'une ou plusieurs instructions de navigation.

3. Procédé (100) selon la revendication 1 ou 2, dans lequel au moins un objet reconnu est reconnu en se basant sur une spécification d'utilisateur.

4. Procédé (100) selon la revendication 1, dans lequel le rang est basé sur un ou plusieurs de l'état de la route, de la longueur de la route, de la difficulté de la route, de paramètres relatifs au terrain de la route, des embouteillages et du trafic le long de la route et de l'heure de la journée.

5. Procédé (100) selon la revendication 1, dans lequel la modification (220) des une ou plusieurs images d'entrée comprend la modification de couleur d'un ou plusieurs objets qui y sont dépeints.

6. Procédé (100) selon la revendication 1, dans lequel la modification (220) des une ou plusieurs images d'entrée comprend l'ajout d'un ou plusieurs objets, la modification d'un ou plusieurs objets ou la suppression d'un ou plusieurs objets des une ou plusieurs images d'entrée.

7. Procédé (100) selon la revendication 1, dans lequel la couleur des objets rendus de route est représentative dudit rang.

8. Procédé (100) selon la revendication 1, dans lequel au moins un des objets rendus est représentatif d'une destination.

9. Procédé (100) selon la revendication 8, dans lequel ladite destination est déterminée par la reconnaissance d'un ou plusieurs objets dans ladite image d'entrée.

10. Procédé (100) selon l'une quelconque des revendications 1 à 9, dans lequel ledit traitement se fait, au moins en partie, par un serveur distant relié de façon communicative.

11. Dispositif mobile (810) configuré pour présenter de l'information de navigation, le dispositif mobile (810) étant constitué pour déterminer sa localisation, le dispositif mobile comprenant :
un module (710) de commande d'affichage constitué pour obtenir une ou plusieurs images d'entrée, et pour fournir une ou plusieurs images de sortie pour présentation,
dans lequel le module de commande d'affichage est en outre constitué pour engendrer les une ou plusieurs images de sortie en obtenant de l'information de navigation pour le dispositif mobile et en traitant les une ou plusieurs images d'entrée pour intégrer l'information de navigation obtenue ; dans lequel le traitement des une ou plusieurs images d'entrée comprend la reconnaissance d'un ou plusieurs objets dans les une ou plusieurs images d'entrée et ledit traitement des une ou plusieurs images d'entrée comprend en outre le rendu d'un ou plusieurs objets,
**caractérisé en ce que** les un ou plusieurs objets rendus comprennent des objets rendus de route représentatifs de deux routes de navigation ou plus, chaque route de navigation étant assortie d'un rang basé sur un ou plusieurs paramètres de route et dans lequel les objets rendus de route sont en outre représentatifs dudit rang.

12. Dispositif mobile (810) selon la revendication 11, comprenant en outre un ou plusieurs des suivants :
(i) un module (725) d'acquisition d'images relié de façon communicative au module (710) de commande d'affichage et constitué pour acquérir les images d'entrée et pour fournir les images d'entrée au module (710) de commande d'affichage ;
(ii) un module (750) d'affichage d'images relié de façon communicative au module (710) de commande d'affichage et constitué pour présenter les images de sortie ;
(iii) un module (745) de détection d'orientation relié de façon fonctionnelle au module (725) d'acquisition d'images et constitué pour détecter l'orientation du module d'acquisition d'images ;
(iv) un module (745) de détection d'inclinaison relié de façon fonctionnelle au module (725) d'acquisition d'images et constitué pour détecter un angle d'inclinaison du module d'acquisition d'images ; et
(v) un module (745) de détection de mouvement relié de façon fonctionnelle au module (725) d'acquisition d'images et constitué pour détecter un mouvement du module (725) d'acquisition d'images.

13. Produit-programme informatique destiné à présenter de l'information de navigation pour un dispositif mobile constitué pour déterminer sa localisation, ledit produit-programme informatique comprenant du code qui, lorsqu'il est chargé dans une mémoire et exécuté sur un processeur associé, est apte à effectuer ce qui suit :
l'obtention (130) d'une ou plusieurs images d'entrée ;
la génération (140) d'une ou plusieurs images de sortie en obtenant de l'information de navigation pour le dispositif mobile et en traitant (200) les une ou plusieurs images d'entrée pour intégrer l'information de navigation obtenue, dans lequel le traitement des une ou plusieurs images d'entrée comprend la reconnaissance d'un ou plusieurs objets dans les une ou plusieurs images d'entrée et ledit traitement des une ou plusieurs images d'entrée comprend en outre le rendu d'un ou plusieurs objets ; et
la fourniture (150) des une ou plusieurs images de sortie pour présentation,
**caractérisé en ce que** les un ou plusieurs objets rendus comprennent des objets rendus de route représentatifs de deux routes de navigation ou plus, chaque route de navigation étant assortie d'un rang basé sur un ou plusieurs paramètres de route et dans lequel les objets rendus de route sont en outre représentatifs dudit rang.
